Europäisches Patentamt

European Patent Office

Office européen des brevets

(11) Publication number: **0 418 061 A2**

# EUROPEAN PATENT APPLICATION

(21) Application number: 90309986.9

(51) Int. Cl.⁵: **H04Q 7/04, H04B 7/26**

(22) Date of filing: 12.09.90

(30) Priority: 14.09.89 GB 8920829
11.12.89 GB 8927973
11.12.89 GB 8927976
11.12.89 GB 8927977

(43) Date of publication of application:
20.03.91 Bulletin 91/12

(84) Designated Contracting States:
AT BE CH DE DK ES FR GB GR IT LI LU NL SE

(71) Applicant: GEC-MARCONI LIMITED
The Grove, Warren Lane
Stanmore, Middlesex HA7 4LY(GB)

(72) Inventor: Rotheram, Stephen
6 Playle Chase
Great Totham, Maldon, Essex(GB)
Inventor: Westcott, Andrew Mark Graham
21 Crocus Way
Springfield, Chelmsford, Essex(GB)
Inventor: West, Barry
54 Torquay Road
Chelmsford, Essex(GB)

(74) Representative: Tolfree, Roger Keith et al
The General Electric Co. p.l.c. Patent
Department GEC-Marconi Research Centre
West Hanningfield Road
Great Baddow, Chelmsford Essex CM2
8HN(GB)

(54) A digital radio communication system.

(57) A digital radio communication system comprises means RS1, RS2 for transmitting a common signal from different locations to a receiver ST designed to cope with multipath.

Figure 1

# A DIGITAL RADIO COMMUNICATION SYSTEM

It has been proposed in digital cellular radio systems to use a type of receiver in subscriber units and in base stations which copes with and, indeed profits from, multipath. This is necessary because of reflections from objects such as mountains or buildings which would otherwise make the signal unuseable. One suitable technique for dealing with multipath employs the so-called Viterbi algorithm which allow signals received from two different paths, and therefore subjected to different time delays, to be utilised positively. Another different technique is known as "equalisation".

In a cellular radio system, a mechanism known as "hand-over" transfers mobile subscriber units from one base station to the next as they move between different geographical areas. This hand-over process utilises resources which could otherwise be used, e.g. for voice communication, and can produce a short discontinuity in communication. When the base stations are relatively widely spaced, the loss is relatively insignificant, but where large numbers of closely spaced base stations are employed, e.g. in a city, the resulting large number of hand-over procedures can present a significant problem.

Another problem in cellular radio system can arise from the subscriber unit moving into an area where it is obstructed, e.g. by a mountain or a building, from the base station it is using at a given time.

The present invention arose when considering these problems and provides a digital radio communication system comprising means for transmitting a signal from different locations to a receiver designed to cope with multipath signals.

By employing the invention, it is possible to remove the problem of hand-over as described above, by transmitting the same signal from a number of base stations and therefore avoiding the need to hand over from one to the other. Furthermore, because transmission and reception is made simultaneously using more than one base station, there is a relatively small chance of both lines of communication being obstructed by objects such as mountains or buildings.

It will be appreciated that the invention can be employed for transmissions in both directions. For the down-link, i.e. in a direction to the subscriber terminal, a message from a given source can be sent to two or more base stations and transmitted simultaneously along different propagation paths to the subscriber terminal. For the up-link, the transmission takes place from the subscriber terminal substantially simultaneously to the two base stations and thence to a receiver capable of coping with multipath before being transmitted to its final destination.

The base stations can be analogous to those conventionally used in cellular radio systems. In an alternative arrangement, there could be specially provided relay stations, a number of which are distributed within one cell of a cellular radio system and which serve simply to relay messages between the subscriber terminals and the base stations.

With such systems as described above there is a demand for a light-weight portable subscriber terminals which in turn implies the use of very low power levels. Because such a system needs to operate using low power levels, it is necessary to establish a large number of relatively small cells each served by its own base station. Each such base station can, like the subscriber terminals, be of low power relative to that used in conventional cellular radio systems. It is now realised that in such a system some types of subscribers may have available to them a relatively high power. An example of this would be where the subscriber terminal can be fixed or where it is located in a motor vehicle.

Advantageously, there is provided a system comprising a number of relatively high power base stations, each serving a relatively large area; a number of relatively low power base stations each serving a relatively small area; a first set of relatively low power subscriber terminals adapted to communicate with the low power base stations; and a second set of relatively high power subscriber terminals adapted to communicate with the high power base stations.

This enables different classes of subscriber terminals to be served by different types of base station as appropriate to their requirements. For example, a subscriber terminal in a vehicle, where high power is available, and which may move rapidly, is allocated a relatively high power base station serving a correspondingly large cell; whilst a relatively low power pedestrian-carried subscriber terminal is served by relatively small low power base stations, one of which will normally be available at relatively short range.

While normally only one type of base station is associated with each class of subscriber terminal, the present invention can also include a control system which incorporates rules for deciding when a terminal can communicate with a given base station for a given set of circumstances. These rules can be fixed or variable and so can take account of variations in traffic conditions, times of day or geographical location. The rules pertaining at any one time can conveniently be entered manually in a control system associated with the base stations.

In one particular form of the invention the low power base stations are designed to relay messages between the high power base stations and the low power subscriber terminals. Such relaying of messages could take place in both directions or alternatively, in just one direction. For example, the subscriber terminals could send messages to the high power base stations via the relay stations but receive messages directly from the high power base stations.

A system as described above necessarily involves enormous financial investment in infra-structure and this investment ultimately needs to be recouped by charges to the users of the service. It would be useful to be able to use the infra-structure for such a wide area coverage system to provide also a service to users who required only a limited area coverage and for users of fixed equipment. In these latter cases it would not be appropriate to charge the users at the same rate as those who required the wider area coverage.

This invention further provides a system comprising a number of radio base-stations providing telecommunication services to users of subscriber terminals, characterised by area coverage definition means in each subscriber terminal defining which base station(s) it can be served by or which base station(s) it can be served by using a given subscriber accounting procedure. In each embodiment each mobile is designed to transmit the appropriate definition of its permitted or preferred area of coverage to a base station and means in the base station or other equipment within the fixed infrastructure to respond to such a transmission by either allowing the base station to serve that mobile only if included in the definition or (b) selecting an appropriate subscriber accounting procedure. However, this is not an essential mode of operation. It will be appreciated that in some circumstances it may be desirable positively to forbid a given subscriber from using any other than certain permitted base stations, whilst in other situations it may be desirable simply to define those base stations which can be accessed within the terms of a subscription agreement but to allow operation in other area subject to the payment, for example, of a surcharge.

The area coverage definition means associated with each subscriber terminal can take a number of different forms. It is preferably a programmable memory of some sort. It can either be fixed within the subscriber terminal or in the form of some replaceable module, for example, a Smart Card. Such replaceable modules are preferably supplied for a fee to a subscriber wishing to vary the definition of his area coverage. Another possibility would be for each subscriber terminal to have a permanent definition of the appropriate area coverage and to require subscribers to purchase new terminals or exchange their existing terminal for a new one if a change in area coverage is required. In a particularly preferred embodiment, the memory is reprogrammable such that the area coverage can be re-defined while other user information remains in the memory.

Where the definition of area coverage is reprogrammable, it would be advantageous to include a facility by which reprogramming could take place automatically from a base station by means of radio signals. Thus the user could make a request for such a change using his mobile equipment and have it implemented at short notice.

One embodiment of the invention will now be described by way of example only with reference to the accompanying drawings, of which:

Figures 1 and 2 show respectively two different aspects of the operation of a system constructed in accordance with the invention;

Figure 3 illustrates schematically a geographical area served by a system constructed in accordance with the invention;

Figure 4 illustrates schematically a geographical area of which the area of Figure 4 forms a sub area; and

Figure 5 schematically illustrates a subscriber terminal.

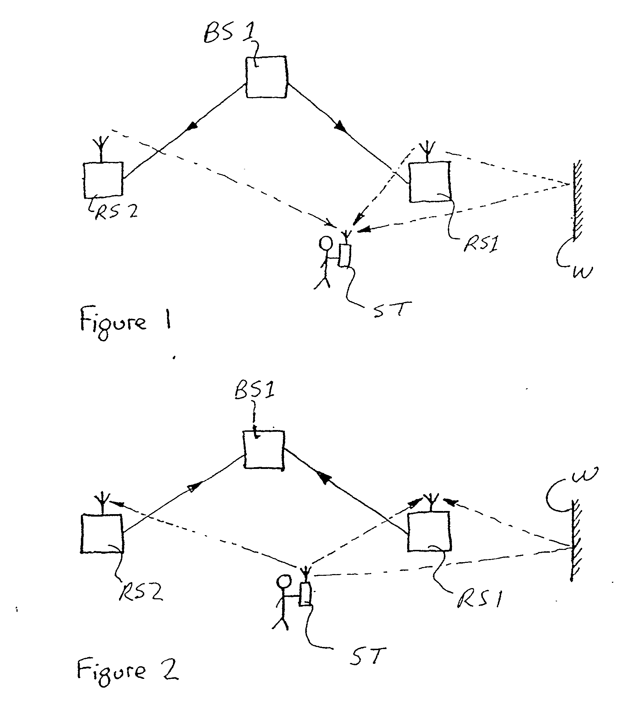

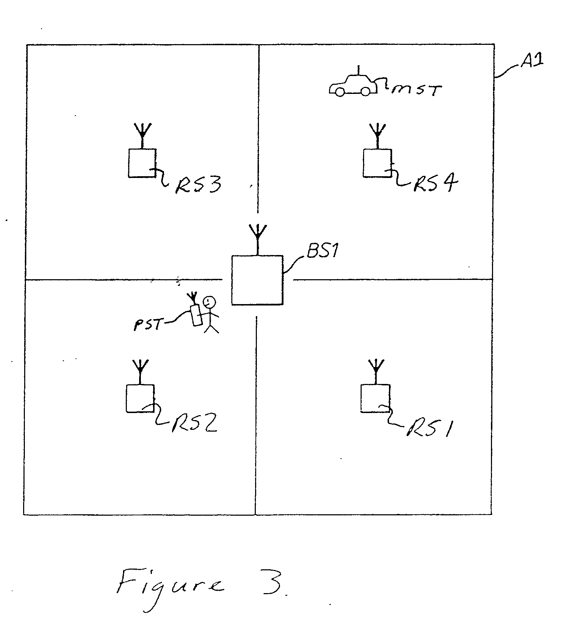

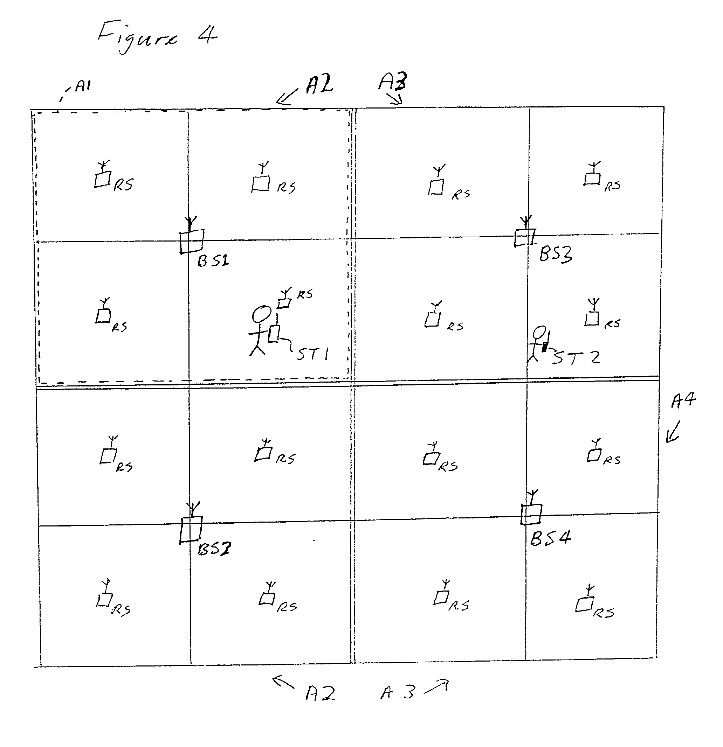

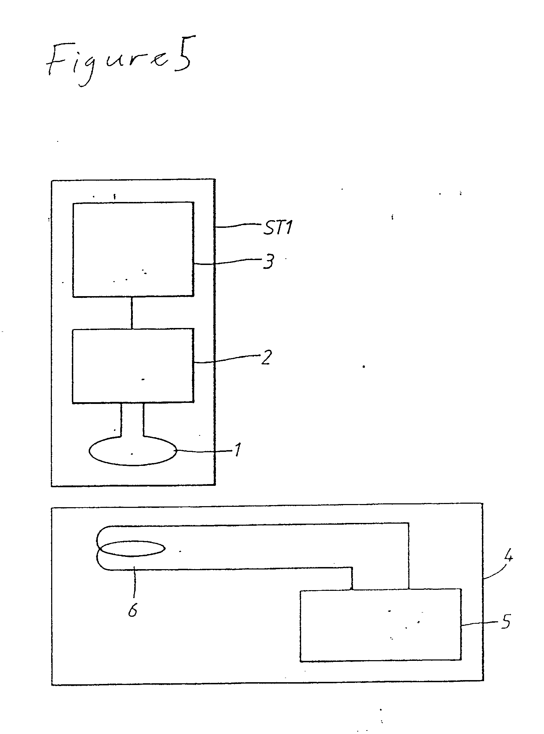

Referring to Figure 1 a base station, BS1 feeds the same signal simultaneously to relay stations RS1 and RS2. The link between the signal source and base stations can be any convenient form such as radio links, electrical or optical. The relay stations RS1 and RS2 substantially simultaneously broadcast the same signal so that it is received along two different routes by a subscriber terminal ST. The subscriber terminal ST is specially designed with a mechanism employing, for example, Viterbi algorithm which allows it to profit from multipath. In this connection the surface of a wall, W, of a building is illustrated in Figure 1 showing how signals from a relay station RS1 are transmitted via secondary reflected path to the subscriber terminal ST. The Viterbi mechanism within a subscriber terminal ST allows it to process those signals profitably and also allows it to process profitably the deliberate multipath signal generated by the use simultaneously of both relay stations RS1 and RS2. In this way an effective communications link is maintained, even if the subscriber terminal should move into a position where the signals from one or other of the base stations cannot be received.

Figure 2 shows the message being transmitted in the opposite direction from a subscriber terminal ST to a base station BS1 via two routes using relay stations RS1 and RS2 respectively. It also shows an accidental multi-path signal being transmitted by way of reflection from Wall W. In an exactly analogous fashion to transmission in the opposite direction an obstruction between subscriber terminal ST and one of the relay stations RS1 and RS2 does not interrupt effective communication because of the existence of the other transmission path.

Referring to Figure 3 there is illustrated the base station BS1 of Figure 1 operating in conjunction with four relay stations RS1, RS2, RS3 and RS4 serving a geographical area A1. It will be understood that other similar geographical areas will be served by other similar base stations as will be illustrated later with reference to Figure 4. Within the area A1 are a number of relatively low power relay stations, of which for clarity only four have been shown, RS1, RS2, RS3, RS4 and RS5, serving respective sub-cells of the area A as shown.

Subscriber terminals located in motor vehicles (hereinafter) referred to as "mobiles"), one of which is shown as MST, are designed to communicate directly with the high power base station BS1 and a hand-over procedure to another high power base station will take place in a manner known per se when the mobile moves out of the area A1 and into another area served by a different base station. The personal subscriber units carried on the person (hereinafter called "portables") and one of which is shown as PST, are designed to communicate with an appropriate low power relay stations RS1, RS2, RS3 and RS4. These low power stations in this particular embodiment of the invention act simply as relay stations for communications passing from the portable stations to the high power base station BS1. The base station BS1 can, in some circumstances, communicate directly with portables such as PST.

In Figure 4 two larger areas A2 and A3 are illustrated, the area A2 comprising area A1 of Figure 3. Area A2 is served by base stations BS1 and BS2, and area A3 by base stations BS3 and BS4. The subscriber terminal ST1 has associated with it a definition of the area A1 and transmits this on each attempt to make a call. In alternative arrangements it may be transmitted periodically or upon registration (i.e. when a set is switched on in the morning).

When the subscriber terminal 1 is used on the area A2 the appropriate base station BS1 or BS2, recognises the transmission via appropriate relays RS from ST1 as being allowable and consequently communication can take place. When the subscriber terminal ST1 moves outside the area A1, e.g. into area A3, the transmission from ST1 is recognised as being outside the defined normal scope of coverage and the system may either prevent communication or generate a signal which instructs an accounting mechanism to make an appropriate adjustment in tariff.

In an alternative systems the subscriber terminal ST1 can be reprogrammable either by radio contact with a base station or by taking the terminal (or a removable module associated with it) to a reprogramming unit. Such a unit is shown on Figure 5. Referring to Figure 5, the subscriber terminal ST1 includes an inductive coupling loop 1, a reprogramming means 2 and an area coverage definition means 3. On payment of an appropriate charge by the subscriber, the reprogramming station 4 produces in a signal generator 5 a signal defining the new permitted area of coverage and the accounting procedures to be adopted for that permitted area and possibly for other areas. This signal is transmitted via inductively coupled loops 6 and 1 to the subscriber terminal and has the effect of modifying the area coverage definition.

## Claims

1. A digital radio communications system comprising means for transmitting a common signal from different locations to a receiver designed to cope with multipath signals.

2. A system according to claim 1 in which the receiver is designed to profit from multipath.

3. A system according to claim 1 or 2 in which the receiver is a mobile or portable unit.

4. A system according to any preceding claim comprising a transmitter designed to transmit the signal to the receiver via relay stations at the said locations.

5. A system as claimed in claim 4, wherein the relay stations all transmit short signals on one frequency.

6. A system as claimed in claim 4 or 5, wherein the relays are dedicated to one transmitter.

7. A digital radio communication system comprising means for receiving a radio signal from a common source at different locations and feeding this signal as received at each location to a receiver designed to cope with multipath.

8. A system as claimed in claim 7, wherein the common source is a mobile or portable unit.

9. A system according to any preceding claims comprising a number of relatively high power base stations each serving a relatively large area; a number of relatively low power base stations each serving a relatively small area; a first set of relatively low power subscriber terminals adapted to communicate with the low power base stations; and a second set of relatively high power subscriber terminal adapted to communicate with the high power base stations.

10. A system according to claim 9 in which the low

7       EP 0 418 061 A2       8

power terminals are also adapted to access or be accessed by, the high power base stations.

11. A system according to claim 9 or 10 in which the high power terminals are also adapted to access the low power base stations.

12. A systems according to claim 10 or 11 in which a control mechanism establishes rules which determine whether a particular terminal accesses a low power or a high power base station.

13. A system according to claim 12 including means for changing the rules.

14. A system according to claim 13 in which the means for changing the rules is designed to do so in response to changes in traffic conditions.

15. A system according to claim 13 in which the means for changing the rules is designed to do so in response to changes in the time of day.

16. A system according to any one of claims 9 to 15 in which the low power base stations are designed to relay messages between the high power base stations and the low power subscriber terminals.

17. A system according to any one of claims 9 to 16 in which the higher power subscriber terminals are located in motor vehicles or fixed.

18. A system according to any one of claims 9 to 17 in which the low power subscriber terminals are hand-portable.

19. A system according to any preceding claim comprising a number of radio base stations providing telecommunication services to users of subscriber terminals characterised by an area coverage definition means in each subscriber terminal defining which base station(s) it can be served by or which base station(s) it can be served by using a given subscriber accounting procedure.

20. A system according to claim 19 in which the area coverage definition means includes means in each subscriber terminal transmitting the definition of base stations and means in each base station for responding to such a transmission by either (a) allowing a base station to serve that mobile only if included in the definition or (b) selecting an appropriate subscriber accounting procedure.

21. A system according to claims 19 or 20 in which the area coverage definition means is a programmable memory.

22. A system according to claims 19, 20 or 21 in which the area coverage definition means is a replaceable module.

23. A system according to one of claims 19 to 22 in which the base station definition is permanently fixed for each subscriber terminal.

24. A system according to any one of claims 19 to 22 in which the base station definition in a subscriber terminal is reprogrammable.

25. A system as claimed in claim 24, wherein means is included for changing the definition by means of radio signals transmitted from a base station.

26. A system according to any one of claims 19 to 22 in which the base station definition in a subscriber terminal is reprogrammable and means is included for changing the definition by means of inductive coupling.

BS 1

RS 2

RS1

W

ST

Figure 1

BS1

RS2

RS1

W

ST

Figure 2

Figure 3.

Figure 4

Figure 5